# EUROPÄISCHE PATENTSCHRIFT

(11) **EP 2 633 179 B1**
(45) Veröffentlichungstag und Bekanntmachung des Hinweises auf die Patenterteilung: **20.08.2014**
(21) Anmeldenummer: 11757877.3
(22) Anmeldetag: 20.09.2011
(51) Int. Cl.: F02M 61/18, F16K 1/36, F02M 63/00, F02M 63/02, F16K 31/06

(54) **DRUCKREGELVENTIL**
PRESSURE REGULATING VALVE
SOUPAPE DE RÉGULATION DE PRESSION

(30) Priorität: 29.10.2010 DE 102010043092
(43) Veröffentlichungstag der Anmeldung: 04.09.2013
(73) Patentinhaber: Robert Bosch GmbH, 70442 Stuttgart (DE)
(72) Erfinder: GRUHL, Helmar, 71711 Steinheim An Der Murr (DE)
(86) Internationale Anmeldenummer: PCT/EP2011/066306
(87) Internationale Veröffentlichungsnummer: WO 2012/055638

(56) Entgegenhaltungen:
- WO-A1-94/15127
- DE-A1- 10 103 975
- DE-A1-102004 002 964
- US-A1- 2010 176 222

## Beschreibung

Die Erfindung betrifft ein Druckregelventil nach dem Oberbegriff des Anspruchs 1.

### Stand der Technik

Im Betrieb einer selbstzündenden Verbrennungskraftmaschine mit einem Hochdruckspeicher (Common Rail) wird der Kraftstoff-Systemdruck im Hochdruckspeicher mittels eines Druckregelventils im Wesentlichen konstant gehalten. Sobald der Druck im Hochdruckspeicher den Systemdruck übersteigt, öffnet das Druckregelventil, wenn der Druck wieder unter den Systemdruck gefallen ist, schließt das Druckregelventil. Hierdurch wird gewährleistet, dass die Kraftstoffeinspritzung in die Zylinder der Verbrennungskraftmaschine unter gleichbleibenden Konditionen erfolgt. Sinkt der Kraftstoffdruck im Hochdruckspeicher unter den Dampfdruck der im Kraftstoff gelösten Luft, gast die Luft aus, sodass neben dem flüssigen Kraftstoff auch eine Gasphase im Hochdruckspeicher enthalten ist. Beim Start der Verbrennungskraftmaschine muss dann das im Hochdruckspeicher enthaltene Gas durch die Hochdruckpumpe komprimiert werden, damit sich im Hochdruckspeicher der für den Betrieb notwendige Druck aufbaut. Abhängig von der Starttemperatur der Verbrennungskraftmaschine sind hierzu mehrere Motorumdrehungen notwendig, wodurch Startverzögerungen auftreten. Um ein Ausgasen der im Hochdruckspeicher enthaltenen Luft zu ermöglichen ist vorgesehen, das Druckregelventil bei abgestelltem Motor in geöffneten Zustand zu stellen.

Aus DE 10 2004 002 964 A1 ist ein Druckregelventil bekannt, bei dem bei Stillstand der Verbrennungskraftmaschine das Druckregelventil geöffnet ist, d.h., dass eine Verbindung vom Hochdruckspeicher in eine Niederdruckleitung von einem Schließelement freigegeben wird. Dazu weist das Druckregelventil einen Magnetaktor auf, der zum Schließen des Schließelements bestromt wird, indem ein Anker das Schließelement in einen Ventilsitz stellt. Zum Öffnen des Schließelements ist ein Federelement vorgesehen, dass entgegen der Magnetkraft des Magnetaktors wirkt und dadurch den Anker und einen daran befestigten Ankerbolzen in Öffnungsrichtung bewegt, wodurch das Schließelement von dem Ventilsitz abhebt und eine hydraulische Rücklaufverbindung zwischen dem Hochdruckspeicher und der Niederdruckleitung freigibt. Die hydraulische Rücklaufverbindung zur Niederdruckleitung erfolgt aus einem dem Ventilsitz nachgeordneten Ventilraum heraus, aus dem radial seitlich abzweigende Bohrungen vorgesehen sind, die in eine Niederdruckleitung im Gehäuse des Hochdruckspeichers münden.

Aus der US 2010/176222 A1 ist ein Kraftstoffinjektor mit einem Magnetsteuerventil bekannt, bei dem der Druckbolzen mehrteilig ausgeführt ist und einen geringen Axialversatz zwischen dem Ventilbolzen und dem Ventilschließelement ausgleichen kann.

### Offenbarung der Erfindung

Das erfindungsgemäße Druckregelventil mit den kennzeichnenden Merkmalen des Anspruchs 1 hat den Vorteil, dass sich aufgrund des Achsversatzes die Führung für das Schließelement hinsichtlich eines deckungsgleichen Ventilsitzes verbessert. Der sonst übliche Prägeprozess mit dem Schließelement zur Ausbildung des deckungsgleichen Ventilsitzes für das kugelförmige Schließelement in der montierten Komponente kann dadurch entfallen. Dadurch können auch unterschiedliche Materialen für die Ventilplatte und das Schließelement verwendet werden.

Vorteilhafte Ausführungsformen sind durch die Maßnahmen der Unteransprüche möglich.

Die Ausführung das Achsversatzes lässt sich auf einfacher Weise dadurch erzielen, indem die Übertragungsstange an einer ventilsitzseitigen Stirnseite eine zylindrische Aufnahme für das Druckstück aufweist, in der das Druckstück mit dem Achsversatz radial verschiebbar angeordnet ist. Zweckmäßigerweise weist das Druckstück einen zylindrischen Abschnitt und einen konischen Abschnitt auf, wobei der zylindrischen Abschnitt in der Aufnahme der Übertragungsstange angeordnet ist. Weiterhin ist zweckmäßigerweise das als Kugel ausgeführte Schließelement in einer kalottenförmigen Aufnahme am konischen Abschnitt aufgenommen.

Eine besonders vorteilhaftes Ausführungsbeispiel wir dadurch erzielt, indem die Übertragungsstange mit einer Rücklaufverbindung ausgeführt ist, die den Ventilraum mit einem Ankerraum hydraulisch verbindet, in dem die Ankerplatte des Ankers aufgenommen ist und der mit einem Niederdruckanschluss hydraulisch in Verbindung stehen kann. Die in die Übertragungsstange integrierte Rücklaufverbindung wird zweckmäßigerweise durch die Ausbildung der Übertragungsstange als Rohr realisiert, wobei die Rücklaufverbindung vom Inndurchmesser des Rohres gebildet ist und vom Innern des Rohres eine Querbohrung durch die Rohrwandung in den Ventilraum führt. Bei dieser Ausführungsform ist zweckmäßigerweise der Rücklaufanschluss an einem Einsatz ausgebildet, der den Ankerraum hydraulisch dicht begrenzt, wobei ein Anschlussstück am Einsatz angeformt ist, das eine Verbindungsleitung aufweist, welche eine hydraulischen Verbindung des Ankerraums zum Rücklaufanschluss ausbildet.

### Beschreibung des Ausführungsbeispiels

Ausführungsbeispiele der Erfindung sind in der Zeichnung dargestellt und in der nachfolgenden Beschreibung näher erläutert.

Es zeigen:
- Figur 1: eine Schnittdarstellung durch ein erfindungsgemäßes Druckregelventil gemäß einem ersten Ausführungsbeispiel,
- Figur 2: eine vergrößerte Schnittdarstellung eines Ausschnitts X in Figur 1,
- Figur 3: eine Schnittdarstellung durch ein erfindungsgemäßes Druckregelventil gemäß einem zweiten Ausführungsbeispiel und
- Figur 4: eine vergrößerte Schnittdarstellung eines Ausschnitts Y in Figur 3,

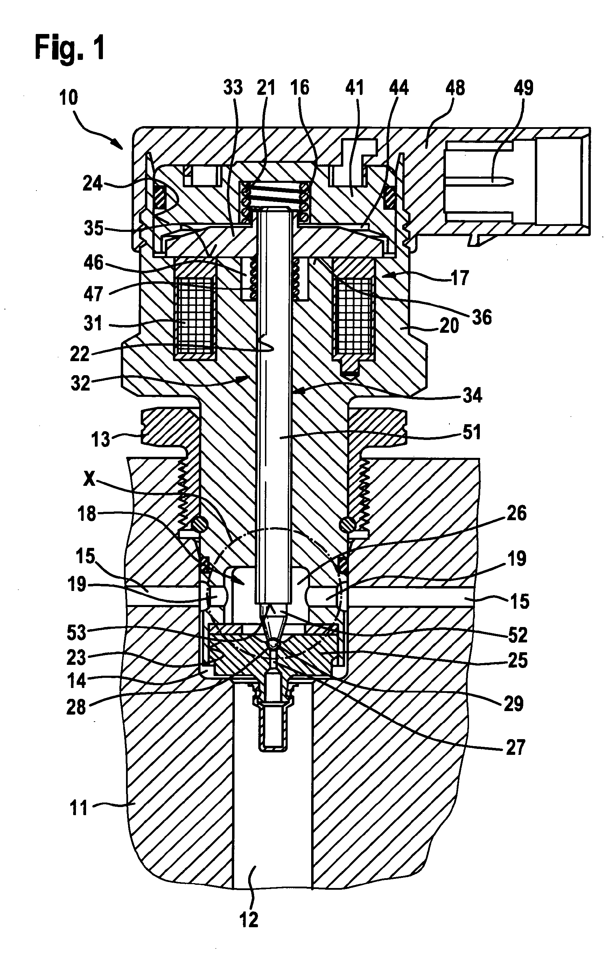

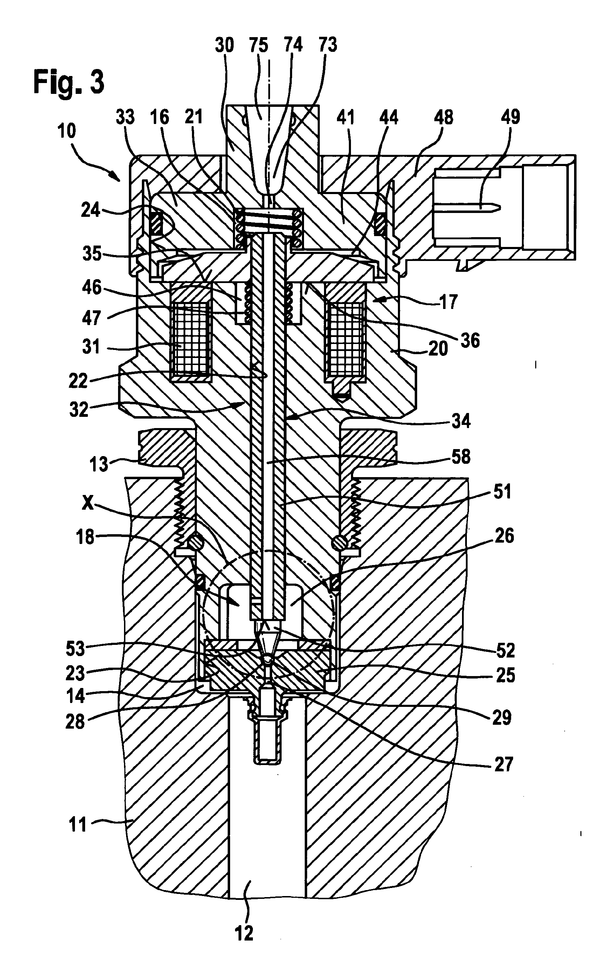

Die in den Figuren 1 und 3 dargestellten Druckregelventile 10 sind jeweils in ein Gehäuse 11 eines Hochdruckspeichers 12 einer Kraftstoffeinspritzeinrichtung mittels einer Gewindehülse 13 in einen Aufnahmeraum 14 eingesetzt. Das Druckregelventil 10 verschließt oder öffnet dabei eine hydraulischen Verbindung vom Hochdruckspeicher 12 zu einem Niederdruckanschluss 15 gemäß Figur 1 oder einem Niederdruckanschluss 75 gemäß Figur 3, die jeweils an eine nicht dargestellte Niederdruckleitung angeschlossen sind, die an einen ebenfalls nicht dargestellten Kraftstoffvorratsbehälter zurückführt.

Das Druckregelventil 10 weist einen Magnetaktor 17 und ein Ventilelement 18 auf, wobei der Magnetaktor 17 das Ventilelement 18 betätigt. Der Magnetaktor 17 und das Ventilelement 18 sind in einem Ventilgehäuse 20 angeordnet, das eine Führung 22, eine hochdruckraumseitige Aufnahme 23 und eine anschlussseitige Aufnahme 24 aufweist.

In der hochdruckraumseitigen Aufnahme 23 ist das Ventilelement 18 angeordnet, das ein Ventilstück 25 und ein Schließelement 29 umfasst, das zweckmäßigerweise als Kugel ausgeführt ist. Das Ventilstück 25 begrenzt beispielsweise über einen Distanzring einen Ventilraum 26. Durch das Ventilstück 25 führt eine Drosselbohrung 27, die den Ventilraum 26 mit dem Hochdruckspeicher 12 hydraulisch verbindet. Im Ventilstück 25 ist weiterhin ein Ventilsitz 28 für das Schließelement 29 ausgebildet. Der Ventilraum 26 ist dem Ventilsitz 28 nachgeordnet, so dass das Schließelement 29 innerhalb des Ventilraums 26 angeordnet ist.

Der Magnetaktor 17 umfasst eine Magnetspule 31 und einen Anker 32, wobei die Magnetspule 31 auf den Anker 32 einwirkt. Der Anker 32 ist mit einer Ankerplatte 33 und einem Ankerbolzen 34 ausgeführt, wobei der Ankerbolzen 34 mit der Ankerplatte 33 fest verbunden ist. Die Ankerbolzen 34 ist in der Führung 22 axial geführt, wobei die Führung 22 durch das Ventilgehäuse 20 axial hindurchgeführt ist. Die Magnetspule 31 bildet mit dem umgebenden Gehäuseteil des Ventilgehäuses 20 einen Magnetkern mit einer Magnetkernstirnfläche 35.

In der anschlussseitigen Aufnahme 24 ist ein Einsatz 41 mittels eines Dichtrings hydraulisch dicht eingesetzt. Der Einsatz 41 und die Magnetkernstirnfläche 35 begrenzen einen Ankerraum 44, in dem die Ankerplatte 33 axial bewegbar angeordnet ist. In die Magnetkernstirnfläche 35 ist ein erster Federraum 46 für eine Druckfeder 47 eingearbeitet, welche in Öffnungsrichtung des Schließelements 29 auf den Magentanker 32 wirkt. Im Einsatz 41 ist ein weiterer Federraum 16 für eine weitere Druckfeder 21 eingearbeitet, welche in Schließrichtung des Schließelements 29 auf den Magnetanker 32 wirkt. Der Einsatz 41 ist mittels einer Umspritzung 48, die elektrische Steckkontakte 49 für die Magnetspule 31 enthält, am Ventilgehäuse 20 gehalten.

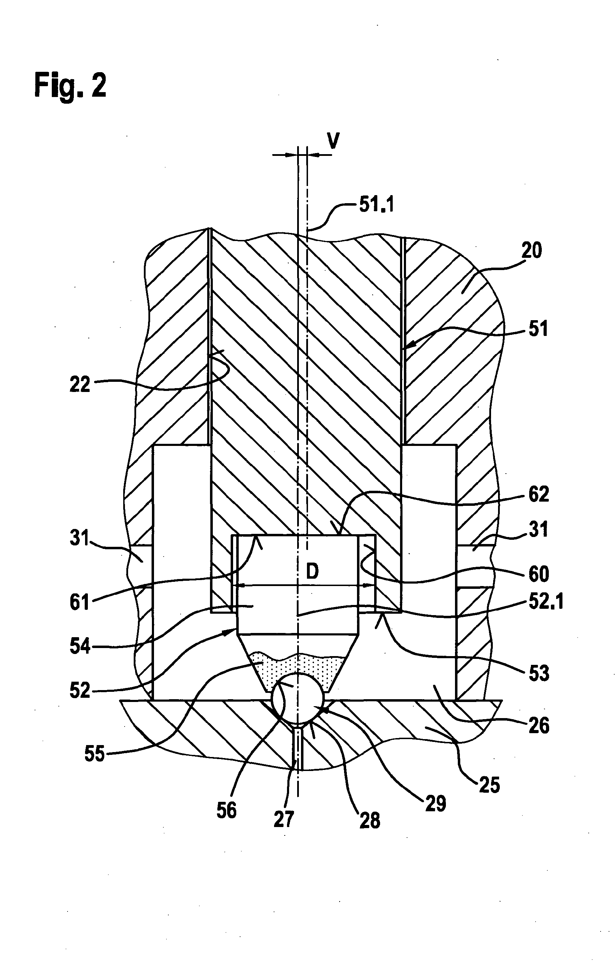

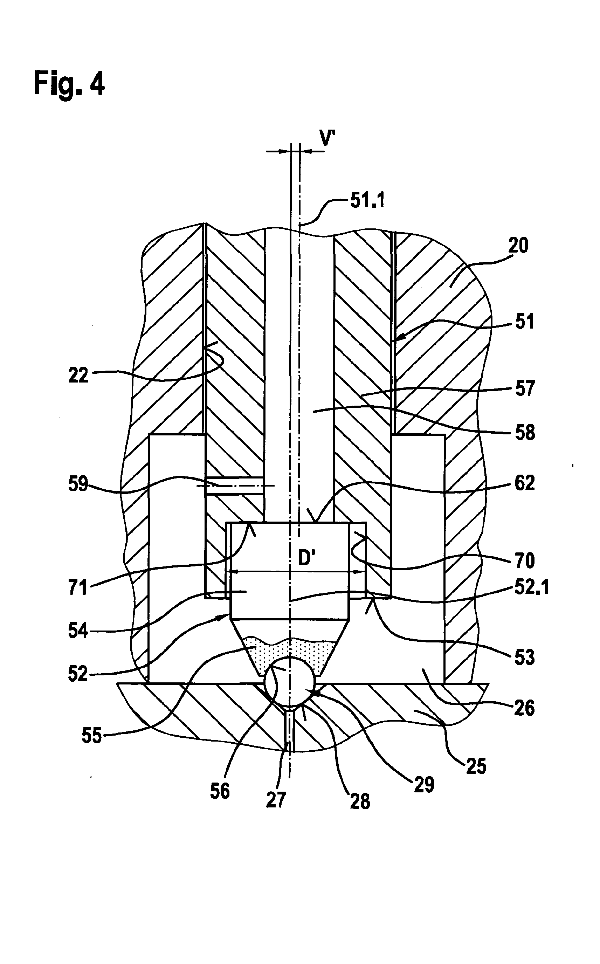

Der Ankerbolzen 34 ist bei beiden Ausführungsbeispielen zweiteilig ausgeführt und weist eine Übertragungsstange 51 mit einer Achse 51.1 und eine Druckstück 52 mit einer Achse 52.1 auf (Figur 2, 4). Die Übertragungsstange 51 ist mit der Ankerplatte 33 fest verbunden. Das Druckstück 52 ist an einer ventilsitzseitigen Stirnseite 53 der Übertragungsstange 51 angeordnet und wirkt auf das kugelförmige Schließelement 29 ein. Gemäß den in Figur 2 und 4 dargestellten Einzelheiten weist das Druckstück 52 einen zylindrischen Abschnitt 54 mit einer Stirnfläche 62 und einen konischen Abschnitt 55 mit einer kalottenförmige Aufnahme 56 auf, wobei die kalottenförmige Aufnahme 56 zum Aufnehmen des kugelförmigen Schließelements 29 dient.

Beim Ausführungsbeispiel gemäß Figur 1 und 2 führen vom Ventilraum 26 beispielsweise zwei Ablaufbohrungen 19 durch das Ventilgehäuse 20 hindurch zu zwei Rücklaufanschlüssen 15, so dass der Ventilraum 26 über die Rücklaufanschlüsse 15 an die Niederduckleitung hydraulisch angekoppelt ist. Beim Ausführungsspiel in Figur 1 und 2 ist die Übertragungsstange 51 aus Vollmaterial ausgeführt und weist an der ventilsitzseitig Stirnseite 53 eine im Wesentlichen zylindrische Aufnahme 60 mit einem Durchmesser D und einer inneren Stirnfläche 61 auf, an der das Druckstück 52 mit der Stirnfläche 62 anliegt. In der Aufnahme 60 ist das Druckstück 52 mit dem zylindrischen Abschnitt 54 aufgenommen, wobei der zylindrische Abschnitt spielbehaftet in der Aufnahme 60 angeordnet ist, so dass zwischen der Achsen 52.2 des zylindrischen Abschnitts 54 des Druckstücks 52 und der Achse 51.1 der Übertragungsstange 51 ein radialer Versatz V vorhanden ist.

Beim Ausführungsbeispiel gemäß Figur 3 und 4 ist in die Übertragungsstange 51 eine Rücklaufverbindung integriert, welche den Ventilraum 26 mit dem Ankerraum 44 hydraulisch verbindet. Die Rücklaufverbindung wird dabei von einer in den Ankerraum 44 mündenden Durchgangsöffnung 58 und einer seitlich abzweigenden und in den Ventilraum 26 mündenden Querbohrung 59 ausgeführt. Die Rücklaufverbindung zwischen Ventilraum 26 und Ankerraum 44 dient hauptsächlich dem dynamischen Druckausgleich zwischen beiden Druckräumen.

Zweckmäßigerweise lässt sich dadurch die Übertragungsstange 51 als Rohr 57 ausführen, wobei der Innendurchmesser des Rohres 57 die Durchgangsöffnung 58 bildet und die Querbohrung 59 durch die Rohrwandung geführt ist. An der ventilsitzseitig Stirnseite 53 weist das Rohr 57 eine im Wesentlichen zylindrische Aufnahme 70 mit einem Durchmesser D' und einer inneren Stirnfläche 71 auf, an der das Druckstück 52 mit der Stirnfläche 62 anliegt. In der Aufnahme 70 ist das Druckstück 52 mit dem zylindrischen Abschnitt 54 aufgenommen, wobei der zylindrische Abschnitt 54 spielbehaftet in der Aufnahme 70 angeordnet ist, so dass zwischen der Achsen 52.1 des zylindrischen Abschnitts 54 des Druckstücks 52 und der Achse 52.1 des Rohres 57 ein radiale Versatz V' vorhanden ist.

Beim Ausführungsbeispiel in Figur 3 und 4 weist außerdem der Einsatz 41 ein Anschlussstück 30 auf, in dem eine Verbindungsleitung 73 mit beispielsweise einer Drossel 74 ausgeführt ist, wobei die Verbindungsleitung 73 eine hydraulischen Verbindung des Ankerraums 44 zum Rücklaufanschluss 75 ausbildet. Dadurch wird der Ventilraum 26 über die Querbohrung 59, die Durchgangsöffnung 58, den Ankerraum 44 und die Verbindungsleitung 73 mit dem Rücklaufanschluss 75 verbunden, der wiederum hydraulisch an die nicht dargestellte Niederduckleitung angekoppelt ist. Beim Ausführungsbeispiel in Figur 3 kann der Rücklaufanschluss 75 wie beim Ausführungsbeispiel in Figur 1 auch direkt mit dem Ventilraum 26 verbunden sein.

## Patentansprüche

1. Druckregelventil zum Öffnen bzw. Verschließen eines Ablaufs eines Hochdruckspeichers (12) für eine Einspritzeinrichtung für Verbrennungskraftmaschine mit einem in einem Ventilgehäuse (20) angeordneten Ventilelement (18), das von einem Magnetaktor (17) betätigbar ist, welcher mit einem Anker (32) auf ein Schließelement (29) des Ventilelements (18) einwirkt, welches eine hydraulische Verbindung vom Hochdruckspeicher (12) zu einem im Ventilgehäuse (20) ausgebildeten Ventilraum (26) verschließt oder freigibt, wobei der Ventilraum (26) hydraulisch mit einem Rücklaufanschluss (15, 75) in Verbindung steht, und wobei der Anker (32) eine Ankerplatte (33) und einen Ankerbolzen (34) aufweist, der im Ventilgehäuse (20) axial geführt ist, wobei der Ankerbolzen (34) mindestens zweiteilig mit einer Übertragungsstange (51) und einem Druckstück (52) ausgeführt und das Druckstück (52) mit einem Achsversatz (V, V') radial verschiebbar an der Übertragungsstange (51) angeordnet ist, **dadurch gekennzeichnet, dass** die Übertragungsstange (51) an einer ventilsitzseitigen Stirnseite (53) eine im Wesentlichen zylindrische Aufnahme (60, 70) für das Druckstück (52) aufweist und die Aufnahme (60, 70) eine innere Stirnfläche (61) aufweist, an der das Druckstück (52) mit einer Stirnfläche (62) anliegt.

2. Druckregelventil nach Anspruch 1, **dadurch gekennzeichnet, dass** das Druckstück (52) einen zylindrischen Abschnitt (54) und einen konischen Abschnitt (55) aufweist, und dass das Druckstück (52) mit dem zylindrischen Abschnitt (54) in der Aufnahme (60, 70) angeordnet ist.

3. Druckregelventil nach Anspruch 2, **dadurch gekennzeichnet, dass** der konische Abschnitt (55) eine kalottenförmige Aufnahme (56) für ein kugelförmiges Schließelement (29) aufweist.

4. Druckregelventil nach Anspruch 1, **dadurch gekennzeichnet, dass** die Übertragungsstange (51) mit einer Rücklaufverbindung (58, 59) ausgeführt ist, die den Ventilraum (26) mit dem Ankerraum (44) hydraulisch verbindet.

5. Druckregelventil nach Anspruch 4, **dadurch gekennzeichnet, dass** im Ankerraum (44) die Ankerplatte (33) des Ankers (32) aufgenommen ist.

6. Druckregelventil nach Anspruch 4, **dadurch gekennzeichnet, dass** die Übertragungsstange (51) als Rohr (57) ausgeführt ist und dass die Rücklaufverbindung (58, 59) vom Innendurchmesser des Rohres (57) und von einer durch die Rohrwandung geführten Querbohrung ausgeführt ist.

7. Druckregelventil nach Anspruch 4 oder 5, **dadurch gekennzeichnet, dass** der Ankerraum (44) mit dem Rücklaufanschluss (75) hydraulisch in Verbindung steht.

8. Druckregelventil nach Anspruch 7, **dadurch gekennzeichnet, dass** der Rücklaufanschluss (75) in einem Einsatz (41) ausgebildet ist, der den Ankerraum (44) hydraulisch dicht begrenzt, und dass am Einsatz (41) ein Anschlussstück (30) mit einer Verbindungsleitung (73) ausgeführt ist, welche eine hydraulischen Verbindung des Ankerraums (44) zum Rücklaufanschluss (75) ausbildet.

## Claims

1. Pressure regulating valve for opening and closing an outlet of a high-pressure accumulator (12) for an injection device for an internal combustion engine, having a valve element (18) which is arranged in a valve housing (20) and which can be actuated by a magnet actuator (17), said magnet actuator acting with an armature (32) on a closing element (29) of the valve element (18), which closing element closes or opens up a hydraulic connection from the high-pressure accumulator (12) to a valve chamber (26) formed in the valve housing (20), wherein the valve chamber (26) is hydraulically connected to a return port (15, 75), and wherein the armature (32) has an armature plate (33) and an armature pin (34) which is guided axially in the valve housing (20), wherein the armature pin (34) is formed at least in two parts with a transition rod (51) and a thrust piece (52), and the thrust piece (52) is arranged with an axial offset (V, V') and in a radially displaceable manner on the transmission rod (51), **characterized in that** the transmission rod (51) has, on an end face (53) at the valve seat side, a substantially cylindrical receptacle (60, 70) for the thrust piece (52) and the receptacle (60, 70) has an inner end surface (61) against which an end surface (62) of the thrust piece (52) bears.

2. Pressure regulating valve according to Claim 1, **characterized in that** the thrust piece (52) has a cylindrical portion (54) and a conical portion (55), and **in that** the thrust piece (52) is arranged with the cylindrical portion (54) in the receptacle (60, 70).

3. Pressure regulating valve according to Claim 2, **characterized in that** the conical portion (55) has a spherical-cap-shaped receptacle (56) for a spherical closing element (29).

4. Pressure regulating valve according to Claim 1, **characterized in that** the transmission rod (51) is formed with a return connection (58, 59) which hydraulically connects the valve chamber (26) to the armature chamber (44).

5. Pressure regulating valve according to Claim 4, **characterized in that** the armature plate (33) of the armature (32) is received in the armature chamber (44).

6. Pressure regulating valve according to Claim 4, **characterized in that** the transmission rod (51) is in the form of a tube (57) and **in that** the return connection (58, 59) is formed by the inner diameter of the tube (57) and by a transverse bore extending through the tube wall.

7. Pressure regulating valve according to Claim 4 or 5, **characterized in that** the armature chamber (44) is hydraulically connected to the return port (75).

8. Pressure regulating valve according to Claim 7, **characterized in that** the return port (75) is formed in an insert (41) which delimits the armature chamber (44) in a hydraulically sealed manner, and **in that** on the insert (41) there is formed a port piece (30) with a connecting line (73) which forms a hydraulic connection of the armature chamber (44) to the return port (75).

## Revendications

1. Soupape de régulation de pression pour l'ouverture ou la fermeture d'une sortie d'un accumulateur haute pression (12) pour un dispositif d'injection d'un moteur à combustion interne, comprenant un élément de soupape (18) disposé dans un boîtier de soupape (20), qui peut être commandé par un actionneur magnétique (17) qui agit avec un induit (32) sur un élément de fermeture (29) de l'élément de soupape (18), qui ferme ou libère une liaison hydraulique de l'accumulateur haute pression (12) à un espace de soupape (26) réalisé dans le boîtier de soupape (20), l'espace de soupape (26) étant en liaison hydraulique avec un raccord de retour (15, 75) et l'induit (32) présentant une plaque d'induit (33) et un boulon d'induit (34) qui est guidé axialement dans le boîtier de soupape (20), le boulon d'induit (34) étant réalisé au moins en deux parties avec une tige de transfert (51) et une pièce de pression (52) et la pièce de pression (52) étant disposée de manière déplaçable radialement avec un décalage axial (V, V') sur la tige de transfert (51), **caractérisée en ce que** la tige de transfert (51) présente au niveau d'un côté frontal (53) du côté du siège de soupape un logement essentiellement cylindrique (60, 70) pour la pièce de pression (52) et le logement (60, 70) présente une face frontale interne (61) contre laquelle la pièce de pression (52) s'applique par une face frontale (62).

2. Soupape de régulation de pression selon la revendication 1, **caractérisée en ce que** la pièce de pression (52) présente une portion cylindrique (54) et une portion conique (55) et **en ce que** la pièce de pression (52) est disposée avec la portion cylindrique (54) dans le logement (60, 70).

3. Soupape de régulation de pression selon la revendication 2, **caractérisée en ce que** la portion conique (55) présente un logement en forme de calotte (56) pour un élément de fermeture (29) de forme sphérique.

4. Soupape de régulation de pression selon la revendication 1, **caractérisée en ce que** la tige de transfert (51) est réalisée avec une connexion de retour (58, 59) qui relie hydrauliquement l'espace de soupape (26) à l'espace d'induit (44).

5. Soupape de régulation de pression selon la revendication 4, **caractérisée en ce que** la plaque d'induit (33) de l'induit (32) est reçue dans l'espace d'induit (44).

6. Soupape de régulation de pression selon la revendication 4, **caractérisée en ce que** la tige de transfert (51) est réalisée sous forme de tube (57) et **en ce que** la connexion de retour (58, 59) est réalisée par le diamètre intérieur du tube (57) et par un alésage transversal guidé à travers la paroi tubulaire.

7. Soupape de régulation de pression selon la revendication 4 ou 5, **caractérisée en ce que** l'espace d'induit (44) est en liaison hydraulique avec le raccord de retour (75).

8. Soupape de régulation de pression selon la revendication 7, **caractérisée en ce que** le raccord de retour (75) est réalisé dans un insert (41) qui limite de manière hydrauliquement étanche l'espace d'induit (44) et **en ce qu'**une pièce de raccordement (30) est réalisée au niveau de l'insert (41) avec une conduite de liaison (73) qui constitue une liaison hydraulique de l'espace d'induit (44) au raccord de retour (75).
